# EUROPEAN PATENT APPLICATION

(11) **EP 1 489 825 A1**
(43) Date of publication of application: **22.12.2004**
(21) Application number: 02724752.7
(22) Date of filing: 09.05.2002
(51) Int. Cl.: H04M 11/00, H04N 1/32

(54) **RELAY APPARATUS, COMMUNICATION CONTROL METHOD, COMMUNICATION CONTROL PROGRAM, AND COMMUNICATION SYSTEM**

(30) Priority: 25.03.2002 WO PCT/JP02/02833
(71) Applicant: Allied Telesis K. K., Shinagawa-ku, Tokyo 141-8635 (JP)
(72) Inventor: NAKAJIMA, Yutaka, c/o Allied Telesis K.K., Shinagawa-ku, Tokyo 141-8635 (JP)
(74) Representative: Grünecker, Kinkeldey, Stockmair & Schwanhäusser Anwaltssozietät
(86) International application number: PCT/JP2002/004535
(87) International publication number: WO 2003/081888

(57) **Abstract**

An interconnecting device for relaying a voice call and a fax communication of a communication terminal between an analog line and a digital line, the digital line having a bandwidth being controlled by a control apparatus, the interconnecting device comprising: a start signal receiving unit for receiving a fax communication start signal from the communication terminal through the analog line, the fax communication start signal indicating a start of the fax communication; and a request signal sending unit for requesting of the control apparatus that the bandwidth of the digital line available to the interconnecting device be expanded from in the voice call when the start signal receiving unit receives the fax communication start signal.

## Description

### TECHNICAL FIELD

The present invention relates to an interconnecting device, a communication control method, a communication control program, and a communication system. The invention is also pertinent to the following international patent application, and the contents of which are incorporated herein by reference if applicable to particular designating states.
Application No.: PCT/JP02/02833.
Filing Date: March 25, 2002.

### BACKGROUND ART

Conventionally, fax communication over an Internet Protocol (IP) network has been effected by such methods as (1) transferring fax signals on VoIP (Voice over IP), (2) transferring fax signals on T.37-compliant FoIP (Fax over IP), and (3) transferring fax signals which are converted under a T.38-compliant conversion mode.

According to the method (1), however, the caller gateway uses CODECs of higher compression rates to convert the fax signals. It is hence difficult for the callee gateway to reproduce the fax signals with high fidelity. According to the method (2), the caller gateway accumulates fax data temporarily before it e-mails the fax data. This means a problem of poor immediacy. Moreover, according to the method (2) or (3), the caller and callee both require T.37- or T.38-compatible gateways.

### DESCRIPTION OF THE INVENTION

It is thus an object of the present invention to provide an interconnecting device, a communication control method, a communication control program, and a communication system which can solve the foregoing problems. The object has been achieved by combinations of features set forth in the independent claims appended. Still favorable embodiments of the present invention are defined by the dependent claims.

To achieve the foregoing object, according to a first aspect of the present invention, an interconnecting device for relaying a voice call and a fax communication of a communication terminal between an analog line and a digital line, the digital line having a bandwidth being controlled by a control apparatus, the interconnecting device includes: a start signal receiving unit for receiving a fax communication start signal from the communication terminal through the analog line, the fax communication start signal indicating a start of the fax communication; and a request signal sending unit for requesting, when the start signal receiving unit receives the fax communication start signal, of the control apparatus that a bandwidth of the digital line available to the interconnecting device be expanded from in the voice call.

When the start signal receiving unit receives the fax communication start signal while the interconnecting device relays a voice call of the communication terminal, the request signal sending unit may request that the bandwidth be expanded.

The start signal receiving unit may receive a CNG (calling tone) signal as the fax communication start signal from the communication terminal.

The request signal sending unit may request that the bandwidth be changed from 8 kbit/s, 6.3 kbit/s, or 5.3 kbit/s to 64 kbit/s.

The interconnecting device may further include: a signal conversion unit for converting a voice signal received from the communication terminal into a digital signal; and a conversion mode determination unit for determining a conversion mode of the signal conversion unit based on whether or not the start signal receiving unit receives the fax communication start signal.

When the start signal receiving unit receives the fax communication start signal while the interconnecting device relays a voice call of the communication terminal, the conversion mode determination unit may change the conversion mode of the signal conversion unit to a conversion mode of lower compression rate than in the voice call.

The conversion mode determination unit may change the conversion mode of the signal conversion unit from G.729 or G.723 to G.711.

According to a second aspect of the present invention, there is provided an interconnecting device for relaying a voice call and a fax communication from a communication terminal, between an analog line and a digital line, wherein the interconnecting device includes: a start signal receiving unit for receiving a fax communication start signal from the communication terminal, the fax communication start signal indicating a start of the fax communication; a signal conversion unit for converting a voice signal received from the communication terminal into a digital signal; and a conversion mode determination unit for determining a conversion mode of the signal conversion unit based on whether or not the start signal receiving unit receives the fax communication start signal.

When the start signal receiving unit receives the fax communication start signal while the interconnecting device relays a voice call of the communication terminal, the conversion mode determination unit may change the conversion mode of the signal conversion unit to a conversion mode of lower compression rate.

According to a third aspect of the present invention, there is provided a communication control method of an interconnecting device for relaying a voice call and a fax communication between an analog line and a digital line, wherein the communication control method includes: receiving a fax communication start signal from a communication terminal through the analog line, the fax communication start signal indicating a start of the fax communication; and requesting, when the fax communication start signal is received, of a control apparatus for controlling the digital line that a bandwidth of the digital line available to the interconnecting device be expanded from in a voice call in the start signal receiving step.

According to a fourth aspect of the present invention, there is provided a communication control method of an interconnecting device for relaying a voice call and a fax communication between an analog line and a digital line, wherein the communication control method includes: receiving a fax communication start signal from a communication terminal for conducting voice calls and fax communications, the fax communication starting signal indicating a start of a fax communication; converting a voice signal received from the communication terminal into a digital signal; and determining a conversion mode in the signal conversion step based on whether or not the fax communication start signal is received in the start signal receiving step.

According to a fifth aspect of the present invention, there is provided a computer readable recording medium for storing a communication control program intended for an interconnecting device for relaying a voice call and a fax communication between an analog line and a digital line, wherein the communication control program operates the interconnecting device as: start signal receiving means for receiving a fax communication start signal from a communication terminal through the analog line, the fax communication start signal indicating a start of the fax communication; and request signal sending means for requesting of a control apparatus for controlling the digital line that a bandwidth of the digital line available to the interconnecting device be expanded from in the voice call when the start signal receiving means receives the fax communication start signal.

According to a sixth aspect of the present invention, there is provided a computer readable recording medium for storing a communication control program intended for an interconnecting device for relaying voice calls and fax communications between an analog line and a digital line, wherein the communication control program operates the interconnecting device as: start signal receiving means for receiving a fax communication start signal from a communication terminal for conducting voice calls and fax communications, the fax communication start signal indicating a start of a fax communication; signal conversion means for converting a voice signal received from the communication terminal into a digital signal; and conversion mode determination means for determining a conversion mode of the signal conversion means based on whether or not the start signal receiving means receives the fax communication start signal.

According to a seventh aspect of the present invention, there is provided a communication system for conducting a voice call and a fax communication of a communication terminal through an analog line and a digital line having a bandwidth, wherein the communication system includes: an interconnecting device for relaying the voice call and the fax communication between the analog line and the digital line; and a control apparatus for determining a bandwidth of the digital line available to the interconnecting device. Here, the interconnecting device includes: a start signal receiving unit for receiving a fax communication start signal through the analog line from the communication terminal, the fax communication start signal indicating a start of a fax communication; and a request signal sending unit for requesting, when the start signal receiving unit receives the fax communication start signal, of the control apparatus for controlling the digital line that the bandwidth of the digital line available to the an interconnecting device be expanded from in a voice call.

It should be noted that not all the essential features of the present invention are enumerated in the summary of the invention seen above. The invention is intended to cover subcombinations of these features as well.

### BRIEF DESCRIPTION OF THE DRAWINGS

These and other objects and advantages of the present invention will become clear from the following description with reference to the accompanying drawings, wherein:
Fig. 1 is a block diagram showing an example of configuration of a communication system 10 according to an embodiment of the present invention;
Fig. 2 is a block diagram showing an example of configuration of a gateway 100a;
Fig. 3 is a schematic diagram showing an example of the communication flow in the communication system 10; and
Fig. 4 is a block diagram showing an example of hardware configuration of the gateway 100a.

### BEST MODE FOR CARRYING OUT THE INVENTION

Hereinafter, the present invention will be described in conjunction with an embodiment of the invention. It is to be understood that the following embodiment do not intend to limit the claimed invention, and that not all the combination of features to be seen in the embodiment is essential to the solving means of the invention.

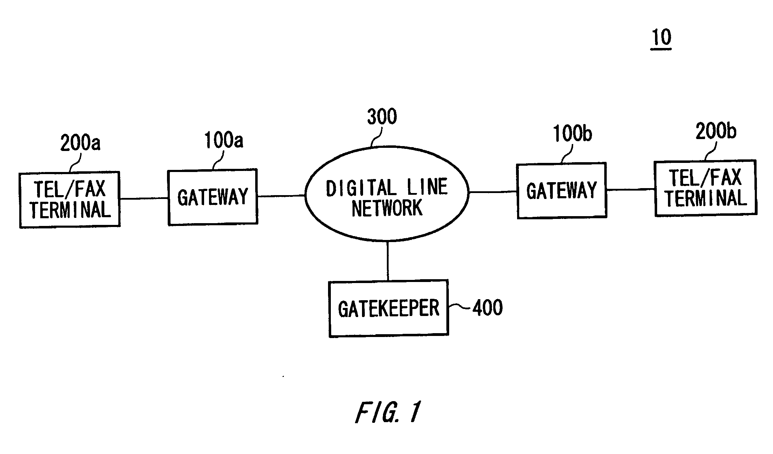

Fig. 1 shows an example of configuration of a communication system 10 according to the embodiment of the present invention. The communication system 10 includes gateways 100a and 100b, TEL/FAX terminals 200a and 200b, and a gatekeeper 400. The gateways 100a and 100b are connected over a digital line network 300 or a packet network 300 such as an IP network or an Ethernet™ network. The TEL/FAX terminal 200a is connected to the gateway 100a through an analog line, and the TEL/FAX terminal 200b is connected to the gateway 100b through an analog line. The gatekeeper 400 controls communication between the gateways 100a and 100b over the digital line network 300. The gateways 100a and 100b are examples of the interconnecting device of the present invention. The TEL/FAX terminals 200a and 200b are examples of the communication terminal of the present invention. The gatekeeper 400 is an example of the control apparatus of the present invention.

The communication system 10 allows voice calls and fax communications between the TEL/FAX terminals 200a and 200b over the digital line network 300. The gateway 100a relays voice calls and fax communications of the TEL/FAX terminal 200a between the analog line and the digital line. The gateway 100b relays voice calls and fax communications of the TEL/FAX terminal 200b between the analog line and the digital line. The gatekeeper 400 determines a bandwidth of the digital line network 300 available to the gateways 100a and 100b.

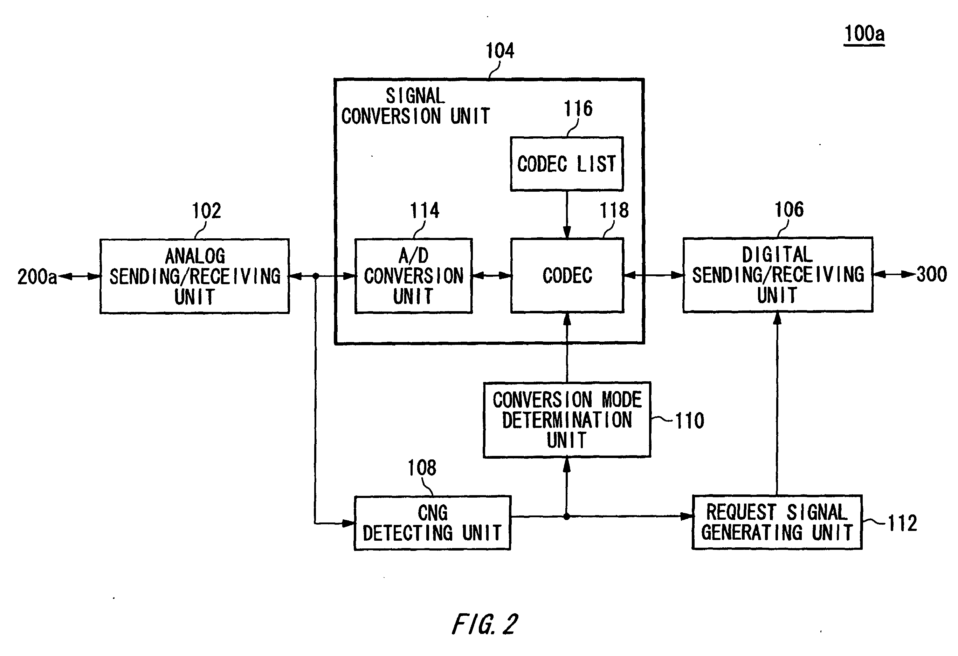

Fig. 2 shows an example of configuration of the gateway 100a. Incidentally, the gateway 100b is identical to the gateway 100a in configuration. Thus, the following description will deal with the gateway 100a alone.

The gateway 100a includes an analog sending/receiving unit 102, a signal conversion unit 104, a digital sending/receiving unit 106, a CNG detecting unit 108, a conversion mode determination unit 110, and a request signal generating unit 112. The signal conversion unit 104 includes an A/D conversion unit 114, a CODEC 118, and a CODEC list 116. The analog sending/receiving unit 102 is an example of the start signal receiving unit of the present invention. The digital sending/receiving unit 106 is an example of the request signal sending unit of the present invention, and may be an Ethernet™ packet unit.

The analog sending/receiving unit 102 sends/receives analog data for a voice call or fax communication to/from the TEL/FAX terminal 200a through the analog line. The digital sending/receiving unit 106 sends/receives digital data for a voice call or fax communication to/from the gateway 100b over the digital line network 300.

The A/D conversion unit 114 converts the analog data of voice signals received by the analog sending/receiving unit 102 into digital data. Then, the CODEC 118 encodes the digital data acquired from the A/D conversion unit 114 under a conversion mode stored in the CODEC list 116, and supplies the resultant to the digital sending/receiving unit 106.

The CODEC 118 also decodes the digital data received by the digital sending/receiving unit 106 under a conversion mode stored in the CODEC list 116. Then, the A/D conversion unit 114 converts the digital data acquired from the CODEC 118 into analog data, and supplies the same to the analog sending/receiving unit 102.

The CNG detecting unit 108 detects if the analog sending/receiving unit 102 receives a CNG (Calling tone) signal, which is of a fax communication start signal for indicating the start of a fax communication. The conversion mode determination unit 110 determines the conversion mode of the CODEC 118 based on whether or not the CNG detecting signal 108 detects the CNG signal. When the CNG signal is detected by the detecting unit 108, the request signal generating unit 112 generates and supplies a bandwidth change request signal to the digital sending/receiving unit 106. The bandwidth change request signal is intended to request a change to the bandwidth of the digital line network 300 available to the gateway 100a. The digital sending/receiving unit 106 sends the bandwidth change request signal to the gatekeeper 400 over the digital line network 300.

According to the gateway 100a of the present embodiment, the conversion mode of the CODEC 118 is determined based on whether or not the CNG signal is received. Appropriate conversion modes can thus be determined for both voice calls and fax communications. Besides, the request for a change to the bandwidth is issued in the cases where the CNG signal is received. Consequently, voice calls and fax communications both can secure respective appropriate bandwidths.

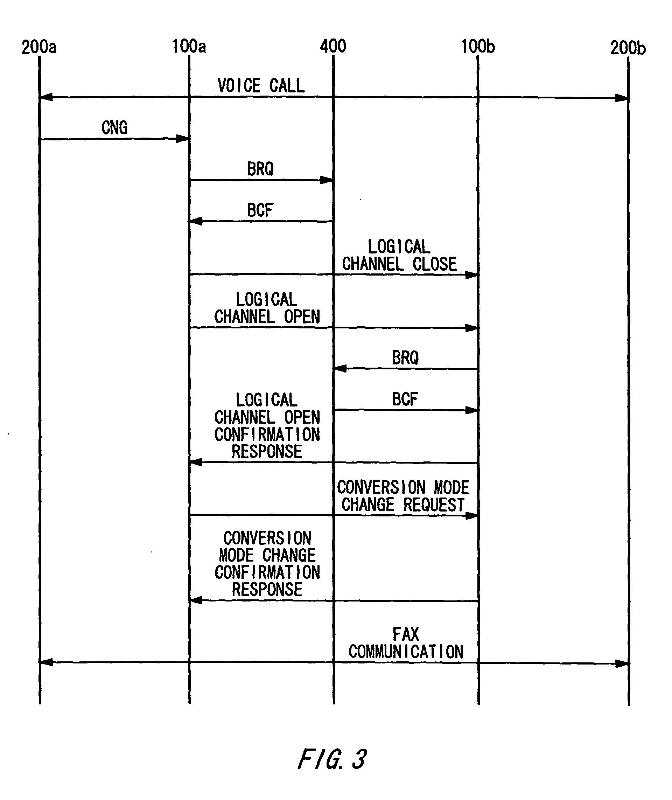

Fig. 3 shows an example of the communication flow in the communication system 10. The TEL/FAX terminals 200a and 200b are conducting a voice call via the gateways 100a and 100b. Here, the gateways 100a and 100b encode/decode data that is received with G.729 or G.723, for example. For the sake of the voice call, the gateways 100a and 100b communicate at a bandwidth of, e.g., 8 kbit/s, 6.3 kbit/s, or 5.3 kbit/s.

While relaying the voice call between the TEL/FAX terminals 200a and 200b, the gateway 100a receives the CNG signal from the TEL/FAX terminal 200a. The gateway 100a then sends to the gatekeeper 400 a bandwidth change request signal (BRQ) requesting that the bandwidth of the digital line network 300 available to the gateway 100a be expanded from in the voice call. For example, the gateway 100a sends a bandwidth change request signal (BRQ) requesting that the bandwidth be changed from 8 kbit/s, 6.3 kbit/s, or 5.3 kbit/s to 64 kbit/s. Consequently, the digital sending/receiving unit 106 of the gateway 100a receives from the gatekeeper 400 a bandwidth change confirmation signal (BCF) corresponding to the bandwidth change request signal (BRQ).

Next, the gateway 100a sends a logical channel close signal to the gateway 100b, thereby requesting the gateway 100b to close the logical channel in use for the voice call. The gateway 100a also sends a logical channel open signal to the gateway 100b, thereby requesting the gateway 100b to open a logical channel for a fax communication.

Subsequently, as with the foregoing operation of the gateway 100a, the gateway 100b sends a bandwidth change request signal (BRQ) to the gatekeeper 400 and then receives a bandwidth change confirmation signal (BCF) from the gatekeeper 400. The gateway 100b sends to the gateway 100a a logical channel open confirmation response signal corresponding to the logical channel open signal, notifying that the logical channel for the fax communication is ready.

When the gateway 100a receives the CNG signal from the TEL/FAX terminal 200a while relaying the voice call between the TEL/FAX terminals 200a and 200b, the gateway 100a also changes the conversion mode of its CODEC 118 to a conversion mode of lower compression rate than in the voice call. For example, the conversion mode is changed from G.729 or G.723 to G.711.

Next, the gateway 100a sends a conversion mode change request signal to the gateway 100b, thereby requesting the gateway 100b to change the conversion mode of its CODEC. The gateway 100b sends to the gateway 100a a conversion mode change confirmation response signal corresponding to the conversion mode change request signal, notifying that the change to the conversion mode of the CODEC is done.

After the completion of the foregoing communication flow, the TEL/FAX terminals 200a and 200b conduct a fax communication via the gateways 100a and 100b. Here, the gateways 100a and 100b encode/decode data that is received with G.711, for example. For the sake of the fax communication, the gateways 100a and 100b communicate at a bandwidth of, e.g., 64 kbit/s.

According to the communication system 10 of the present embodiment, the conversion modes of the CODECs 118 and the bandwidth of the digital line network 300 are changed depending on which to conduct, a voice call or a fax communication. This allows effective use of the bandwidth of the digital line network 300. In addition, if a fax communication is started during a voice call, the compression rates of the CODECs 118 are lowered and the bandwidth of the digital line network 300 is expanded. It is therefore possible to provide fax communication of good quality while maintaining immediacy. Furthermore, fax communication of good quality can also be provided even if the gateways 100a and 100b are incompatible to T.37 or T.38.

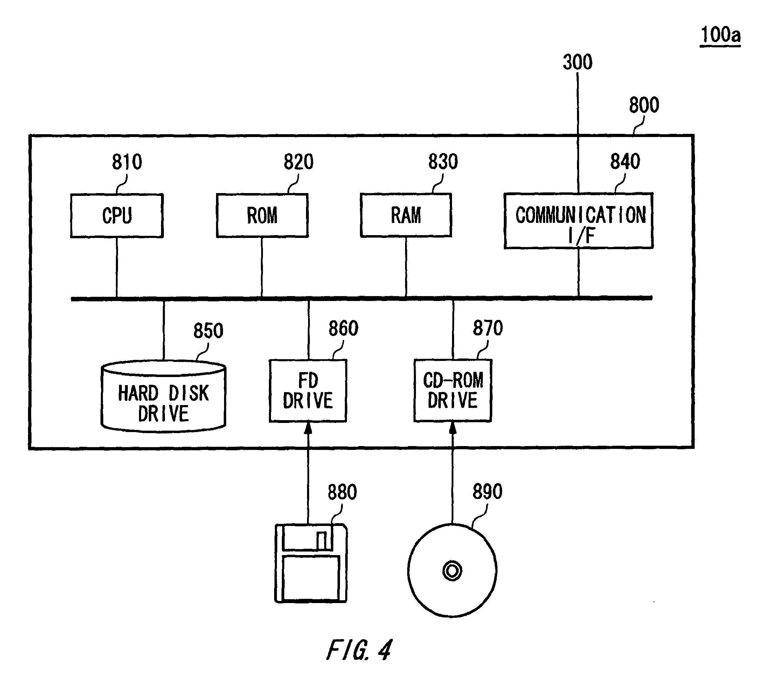

Fig. 4 shows an example of hardware configuration of the gateway 100a. The facilities of the gateway 100a are implemented by the cooperation between a computer 800 which includes a CPU 810, a ROM 820, a RAM 830, a communication interface 840, and a hard disk drive 850, and a program to be run on the computer 800. The computer 800 may also be equipped with a floppy disk drive 860 and/or a CD-ROM drive 870.

The program for implementing the facilities of the gateway 100a includes an analog sending/receiving module, a signal conversion module, a digital sending/receiving module, a CNG detecting module, a conversion mode determination module, and a request signal generating module. These modules are programs for operating the computer 800 as an analog sending/receiving unit, a signal conversion unit, a digital sending/receiving unit, a CNG detecting unit, a conversion mode determination unit, and a request signal generating unit, respectively.

The program or modules mentioned above may be stored in external recording media. Aside from a floppy disk 880 and a CD-ROM 890, the recording media available include optical recording media such as a DVD and a PD, magnetooptic media such as an MD, tape media, and semiconductor memories such as an IC card. The recording media may also be such storage devices as a hard disk or a RAM that is installed on a server system connected to a dedicated communication network or the Internet. In this case, the program can be supplied to the computer 800 through an external network, a network connected to the computer 800, etc.

While an embodiment of the invention has been described, the technical scope of the invention of this application is not limited to the foregoing embodiment. Various changes and modifications may be made to the foregoing embodiment in practicing the inventions set forth in the appended claims. It is evident from the claims that all such inventions also fall within the technical scope of the invention of this application.

### INDUSTRIAL APPLICABILITY

As is clear from the description given so far, according to the invention, it is possible to provide an interconnecting device, a communication control method, a communication control program, and a communication system for implementing fax communication of good quality over an IP network.

## Claims

1. An interconnecting device for relaying a voice call and a fax communication of a communication terminal between an analog line and a digital line, the digital line having a bandwidth being controlled by a control apparatus, said interconnecting device comprising:
a start signal receiving unit for receiving a fax communication start signal from the communication terminal through the analog line, the fax communication start signal indicating a start of the fax communication; and
a request signal sending unit for requesting of the control apparatus that the bandwidth of the digital line available to said interconnecting device be expanded from in the voice call when said start signal receiving unit receives the fax communication start signal.

2. The interconnecting device according to claim 1, wherein, when said start signal receiving unit receives the fax communication start signal while said interconnecting device relays the voice call of the communication terminal, said request signal sending unit requests that the bandwidth be expanded.

3. The interconnecting device according to claim 1, wherein said start signal receiving unit receives a calling tone (CNG) signal serving as the fax communication start signal from the communication terminal.

4. The interconnecting device according to claim 2, wherein said request signal sending unit requests that the bandwidth be changed from 8 kbit/s, 6.3 kbit/s, or 5.3 kbit/s to 64 kbit/s.

5. The interconnecting device according to claim 1, further comprising:
a signal conversion unit for converting a voice signal received from the communication terminal into a digital signal; and
a conversion mode determination unit for determining a conversion mode of said signal conversion unit based on whether or not said start signal receiving unit receives the fax communication start signal.

6. The interconnecting device according to claim 5, wherein when said start signal receiving unit receives the fax communication start signal while the interconnecting device relays the voice call of the communication terminal, said conversion mode determination unit changes the conversion mode of said signal conversion unit to have a lower compression rate than in the voice call.

7. The interconnecting device according to claim 6, wherein said conversion mode determination unit changes the conversion mode of said signal conversion unit from G.729 or G.723 to G.711.

8. An interconnecting device for relaying a voice call and a fax communication from a communication terminal, between an analog line and a digital line, comprising:
a start signal receiving unit for receiving a fax communication start signal from the communication terminal, the fax communication start signal indicating a start of the fax communication;
a signal conversion unit for converting a voice signal received from the communication terminal into a digital signal; and
a conversion mode determination unit for determining a conversion mode of said signal conversion unit based on whether or not said start signal receiving unit receives the fax communication start signal.

9. The interconnecting device according to claim 8, wherein, when said start signal receiving unit receives the fax communication start signal while said interconnecting device relays the voice call of the communication terminal, said conversion mode determination unit changes the conversion mode of said signal conversion unit to have a lower compression rate.

10. A communication control method of an interconnecting device for relaying a voice call and a fax communication between an analog line and a digital line, comprising:
receiving a fax communication start signal from a communication terminal through the analog line, the fax communication start signal indicating a start of the fax communication; and
requesting of a control apparatus for controlling the digital line that a bandwidth of the digital line available to the interconnecting device be expanded from in the voice call when the fax communication start signal is received in said start signal receiving step.

11. A communication control method of an interconnecting device for relaying a voice call and a fax communication between an analog line and a digital line, comprising:
receiving a fax communication start signal from a communication terminal for conducting the voice call and the fax communication, said fax communication starting signal indicating a start of the fax communication;
converting a voice signal received from the communication terminal into a digital signal; and
determining a conversion mode of said signal conversion step based on whether or not the fax communication start signal is received in said start signal receiving step.

12. A computer readable recording medium for storing a communication control program intended for an interconnecting device for relaying a voice call and a fax communication between an analog line and a digital line, the communication control program operating said interconnecting device as:
start signal receiving means for receiving a fax communication start signal from a communication terminal through the analog line, the fax communication start signal indicating a start of the fax communication; and
request signal sending means for requesting of a control apparatus for controlling the digital line that a bandwidth of the digital line available to said interconnecting device be expanded from in the voice call when said start signal receiving means receives the fax communication start signal.

13. A computer readable recording medium for storing a communication control program intended for an interconnecting device for relaying a voice call and a fax communication between an analog line and a digital line, the communication control program operating said interconnecting device as:
start signal receiving means for receiving a fax communication start signal from a communication terminal for conducting a voice call and a fax communication, the fax communication start signal indicating a start of the fax communication;
signal conversion means for converting a voice signal received from the communication terminal into a digital signal; and
conversion mode determination means for determining a conversion mode of said signal conversion means based on whether or not said start signal receiving means receives the fax communication start signal.

14. A communication system for conducting a voice call and a fax communication of a communication terminal through an analog line and a digital line having a bandwidth, comprising:
an interconnecting device for relaying the voice call and the fax communication between an analog line and the digital line; and
a control apparatus for determining the bandwidth of the digital line available to said interconnecting device,
said interconnecting device including,
a start signal receiving unit for receiving a fax communication start signal through the analog line from the communication terminal, the fax communication start signal indicating a start of the fax communication, and
a request signal sending unit for requesting, when said start signal receiving unit receives the fax communication start signal, of said control apparatus for controlling the digital line that the bandwidth of the digital line available to said interconnecting device be expanded from in the voice call.
